# EUROPEAN PATENT SPECIFICATION

(11) **EP 0 641 518 B1**
(45) Date of publication and mention of the grant of the patent: **08.07.1998**
(21) Application number: 93310495.2
(22) Date of filing: 23.12.1993
(51) Int. Cl.: A22C 9/00

(54) **Hand held meat tenderizer**
Handgerät zum Mürbemachen von Fleisch
Appareil portatif pour attendrir la viande

(30) Priority: 02.09.1993 US 116116
(43) Date of publication of application: 08.03.1995
(73) Proprietor: Jaccard, Andre R., Holland, New York 14080 (US)
(72) Inventor: Jaccard, Andre R., Holland, New York 14080 (US)
(74) Representative: Goode, Ian Roy

(56) References cited:
- FR-A- 1 394 786
- GB-A- 1 034 430
- US-A- 1 986 074
- US-A- 3 869 755
- US-A- 4 199 841
- US-A- 4 870 717

## Description

This invention relates to a meat tenderizer, and more specifically, to a motorized handheld meat tenderizer.

There are several known methods for tenderizing meats, some chemical and some mechanical. The chemical meat tenderizing processes are falling out of favour because of the required use of chemicals and because of the present availability of mechanical tenderizers. Mechanical meat tenderizers have been known for many years such as those described in US-A- 207,107, US-A- 1,047,346, and US-A- 1,903,789. More recent popular meat tenderizers are disclosed in US-A- 4,199,841 (Jaccard I) and US-A- 4,463,476 (Jaccard II). All of these patents disclose handheld mechanical means for tenderizing meats, but none of them suggests the use of motorized handheld means for this process.

In Jaccard I a handheld meat tenderizer is disclosed which allows a plurality of incisions to be made simultaneously in a meat cut and which comprises a plurality of blades attached to a handle. The handle in Jaccard I comprises a pair of separable complementary members secured together by a bolt extending through one of the handle members, through the blade assembly, and in threaded engagement with the other handle member. Users of Jaccard I push down on the handle and compression springs 59 permitting the blades to move up and down.

In Jaccard II the same type of manual handheld tenderizer is disclosed having a liquid flow channel therein to accommodate the flow of fluids therethrough for improved cleaning. In both Jaccard I and Jaccard II springs and spring housings are needed, as is blade-handle attachment, which somewhat complicates dismantling of the devices. Also, after cleaning or blade replacement, reassembly of pieces including handle parts, springs, spring housings, spacers, blades and other components, could become tedious and complicated. The tenderizers disclosed in Jaccard I and Jaccard II have become very successful handheld meat tenderizers both in households and commercial establishments. Cleaning and replacement of the blades in these tenderizers can be complicated and somewhat difficult. The blade segments of Jaccard I and Jaccard II are removed for sharpening or replacement by loosening and removing a screw 25 (in US-A- 4,199,841). This process separates handle members 19 and 21 and opens the tenderizer so that blade segments 15 can be removed together with spacer blocks 31 and 32. After the blade segment or segments are sharpened or removed and replaced, spacer blocks 31 and 32 must be arranged and interfitted with blade segments 15 so that bolt or screw 25 apertures are all aligned. Since the bolt 25 traverses through all blade segments in Jaccard I and II, removal of bolt 25 disturbs and displaces all other elements such as other blade segments 15, all spacer blocks 31 and handle members 19 and 21. Thus, to change a blade, central screw 25 is removed; each have to be realigned with all blade segments 15 and spacer blocks 31 and handle parts 19 and 21 when being reassembled. These same dismantle-assemble complex manoeuvres are necessary in most prior art tenderizers.

In US-A- 1,047,346 for example, bolts 14 are passed through each blade or knife segment for holding or clamping these sections together. The knives are secured by a bolt 14 and are removed by removing bolt 14. By further removing pins 18 any or all of the knives (blades) can be replaced should any become worn or broken (see column 2, lines 85-100). To reassemble, all of the blades need to be removed even if only one is to be replaced, and all aligned with apertures adjacent each other for the securing together by bolt 14.

US-A- 1,903,789 also discloses a meat tenderizer having blades 12 with apertures 15 for receiving a bolt; the bolt being employed to rigidly secure the blades 12 together. The bolt is tightened by wing nut 17 to hold all of the blades and tongues together. Again to remove one blade all of the blades need to be displaced; the same with reassembly (see page 2, lines 32-50).

US-A-4,870,717 discloses a cutter blade unit, integral holder plate and a vertically slidable pressing member. The cutter blades extend downwardly through an accommodating slit in the pressing member, when the meat tenderiser is pressed downwardly by the operator against a meat surface.

There are also motorized tenderizers known and used in the prior art. Large conveyor commercial type tenderizers such as disclosed in US-A- 4,216,566 are known. These type tenderizers are usually large complex pieces of commercial equipment requiring a large base or foundation to support the actual tenderizing mechanism. Smaller handheld motorized tenderizers are disclosed in US-A-3,892,988 and 4,908,909. Neither of these patents discloses a handheld tenderizer that provides safety or protective means over the exposed knives or rollers. In US-A-3,892,988, serrated roller 11 and serrated surface 53 are exposed without any protective devices provided to prevent injury by the exposed surface 53. In US-A-4,908,909, the hammer head 8 is also exposed, which could cause a safety hazard when in use or in motion. Neither of these two patents suggests a simple blade construction to facilitate changing of one of the blades without disturbing the remaining blades.

US-A-3,869,755 discloses a portable motor-driven tenderiser comprising a housing carrying a reciprocable blade. Said blade passes through a guiding foot which enables the blade to engage the meat surface at an angle of approximately 45°.

It is therefore an object of this invention to provide an automatic handheld tenderizer devoid of the above-noted disadvantages.

According to the present invention, there is provided a handheld meat tenderizer including a housing, a blade assembly comprising one or more blade segments and a blade holder, the or each blade segment comprising a body portion having a plurality of blades extending therefrom; a guide plate for the blades which is mounted by way of resilient mounting means on the housing, and a power means within the housing for moving the blade assembly with a reciprocating motion, the housing comprising a blade housing portion and a handle portion which are removably attached to one another at a location remote from the blade assembly, and the sharpened terminal portions of the blades being located behind the exterior surface of the guide plate until pressure is applied to the housing by the user to compress the resilient mounting means and reduce the distance between the guide plate and the housing, whereby on operation of the power means the blade terminal portions make reciprocating movements through an opening in the guide plate; and wherein the blade holder has at least one groove of T-shaped cross-section therein, and the edge of the body portion of a blade segment remote from the blades is shaped for sliding engagement in the groove.

The invention provides a motorized handheld tenderizer that is simple in construction and relatively easy to manufacture. It is easy to clean, replace blades, reassemble and lubricate, and is easy and effective to use. It uses a plurality of readily available components, and is powered by a conventional small motor that may easily be repaired or replaced.

According to one embodiment, a handheld meat tenderizer comprises in combination a tenderizer housing, a movable blade assembly, a guide plate and power means to move said blade assembly, said tenderizer housing comprising a blade housing and a handle housing, said blade housing having separation means to thereby be detachable from said handle housing, said separation means located at a position obscure from said blade assembly and separated therefrom, said blade assembly having at least one blade segment having sharpened elongated blades, said blade segment out of contact with said separation means and being removable from said blade assembly, said power means located within said tenderizer housing, said power means in movable connection to said blade assembly and adapted to move said blade segments of said blade assembly through slits in said guide plate, said slits in said guide plate being of sufficient dimension to permit blades of said blade segments to pass therethrough, said guide plate covering substantially all of the terminal portions of said blade segments when said tenderizer is inactive.

In another embodiment, a blade segment is provided for use in a handheld meat tenderizer comprising an integral unit having a substantially rectangular configuration when viewed from a front perspective and having a substantially T-shaped configuration when viewed from a side perspective, said blade segment having an upper substantially solid section having a plurality of elongated sharpened blades suspended therefrom, each of said sharpened blades terminating in a bevelled, pointed and sharpened manner for easier entrance in a meat portion to be tenderized.

The handheld meat tenderizer has a powered motion means (power means) that imparts an up and down motion to the tenderizer blades. By "blades" is meant to include needles, knives, blades or other sharp means to tenderize the meat. A small motor is provided in the interior of the tenderizer housing which includes an armature in which the electromotive force or other force is induced such as air driven blades. An arm or rod (connecting means) is movably attached to the rotary extending out from the motor on one end and attached to a blade fork on the other end. The circular movement of the rotary will impart to the arm (connecting means) a reciprocating motion which correspondingly is directed to the blades to produce an up and down motion. The motor used can be powered by batteries, electricity or other means or fuels. Any conventional motor may be used such as those used in electric drills, air driven devices, guns or the like. Telescoping pistons or other spring-loaded tubes are used to support the blade guide, allowing blade up-down movement to take place through an aligned guide aperture in the blade guide. These tubes provide a resilient mounting for the blade guide, so that pressure by the user on the main frame of the tenderizer reduces the distance between the blade guide and the main frame, thereby exposing the ends of the blades for use. The blade guide (guide plate) used to maintain a straight blade path is located at the lower terminal end of the two tubes which connect the guide plate to the main frame of the tenderizer. An important feature of the guide plate is a protective or safety means which substantially completely covers the sharp sections of the blades until downward pressure is applied to the tenderizer when it is in use. In the guide plate there are positioned one or more horizontally (or vertically) disposed slits or apertures through which the blades pass on their way to contacting the meat surface to be tenderized. The blades are in vertical alignment with the slits and are prevented from bending by their proximity to the sides of each slit. In one blade configuration, i.e. with one blade segment, only one slit is required in the guide blade. In embodiments having more than one blade segment, the number of slits will be equal to the number of blade segments used. The blade holder provides means for holding one or multiple blades together and can take any suitable configuration that will permit blades to be individually removed without disturbing or displacing the other blades. This provides easy access to the blades when removal and replacement of one blade segment is required or to oil the blades for improved performance.

Embodiments of a meat tenderizer in accordance with the invention will now be described, by way of example, with reference to the accompanying drawings, in which:-
Figure 1 is a perspective side view of a first embodiment of a tenderizer in accordance with the invention;
Figure 2 is a side view, in cross-section, of the tenderizer of Figure 1;
Figure 3 is a side view of the tenderizer of Figure 1 while in use;
Figure 4 is a perspective side view of another embodiment of a tenderizer of the invention;
Figure 5 is a side view, in cross-section, of the tenderizer of Figure 4;
Figure 6 is a side view of the motor arm connection to the blades of any embodiment of the invention; and
Figure 7 is a perspective view of the blade holder with individual removable blade segments.

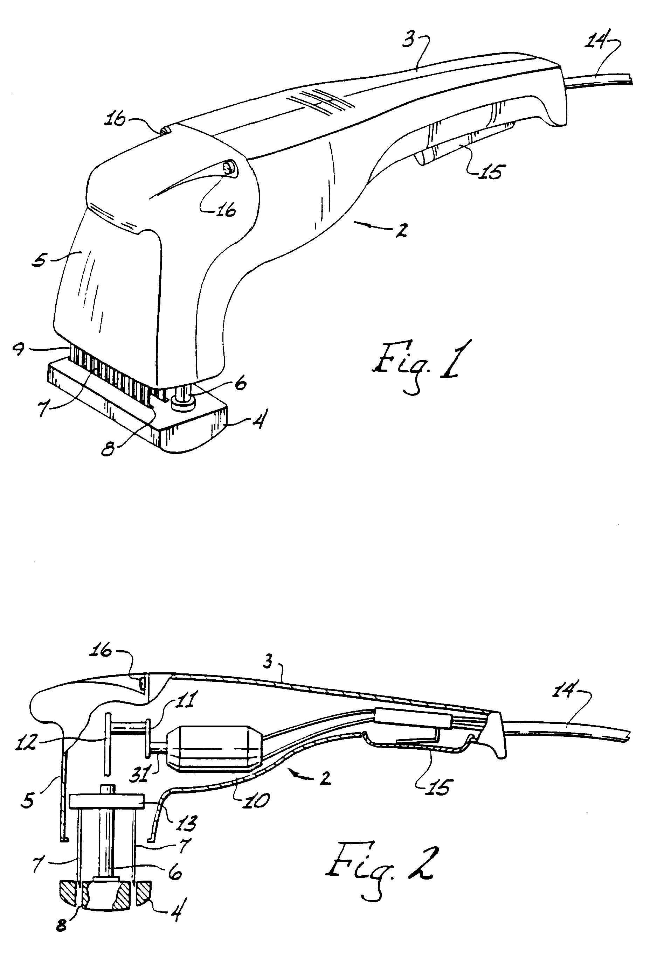

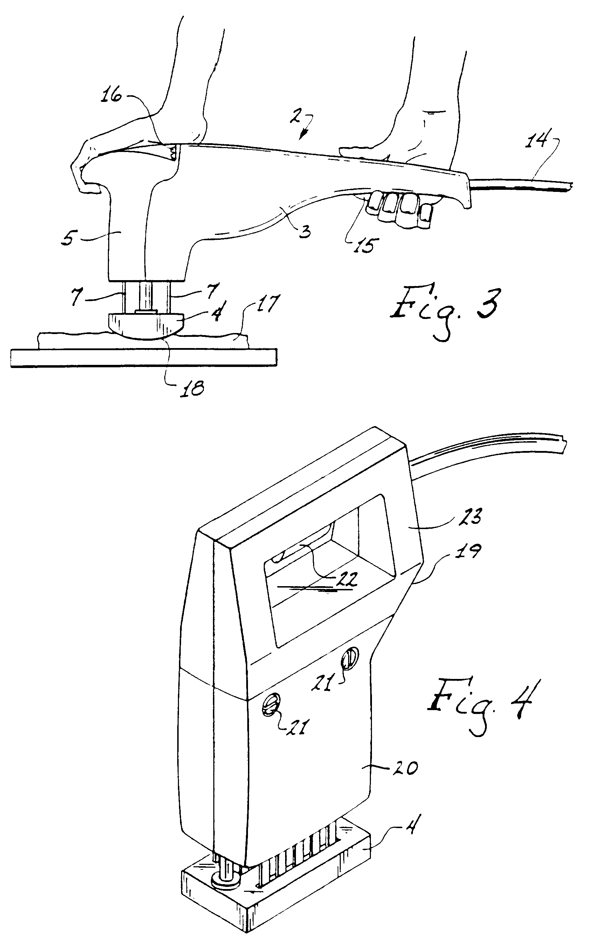

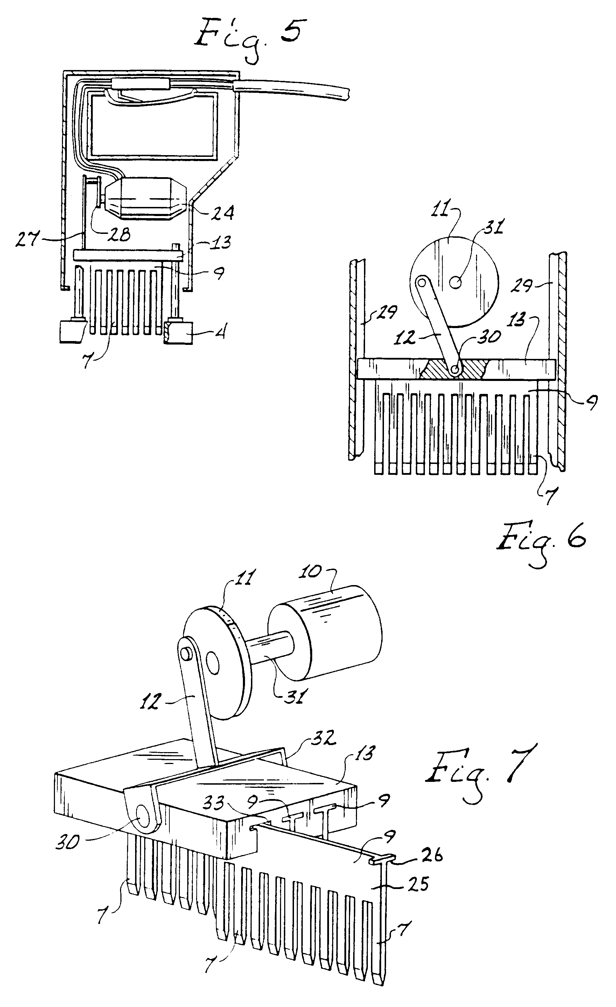

Referring to Figures 1 to 3, a tenderizer is made up of a handle housing 2 having a handle portion 3 and a blade housing portion 5. A blade guide 4 is located below the blade housing 5 and is connected thereto by tubular structures 6. The guide 4 maintains blades 7 in alignment and guides the blades 7 during their downward path into the meat to be tenderized. The guide 4 serves as a safety means to prevent exposure of the sharp end portions of blades 7 when the tenderizer is not in use. The guide 4 has an equal number of slits or apertures 8 to the number of blade segments 9 used. The embodiment of Figure 1 shows the use of three blade segments 9 and three guide slits 8, however, any number of slits 8 may be used. The blades are moved relative to the guide 4, up and down or toward and away from the meat, by the power means or motor 10 as shown in Figure 2. The guide 4 is movable towards the housing by the pressure applied to the handle by the user against a spring force associated with the tubes 6. The power means is located within the tenderizer housing. As the motor shaft 31 rotates, it moves arm 12 via rotary 11 in a circular motion causing up and down motion to blade holder 13 and blades 7 relative to tubes 6 and blade guide 4. An electric cord 14 connects motor 10 to a power source; however, batteries may be used in place of electrical outlets such as cords or wires 14. Also, if suitable, other power sources such as fuels, solar energy and the like may be used to power the motor 10. An appropriate activation means such as trigger 15 connected to motor activation means may be used in a conventional way similar to that of an electric drill. To remove or clean and replace the blades, the user merely needs to loosen screws 16 to disengage blade housing 5 from handle housing 2 to gain access to the blade segments 9. Blade holder 13 together with segments 9 is then lifted out of the housing 5 (or housing 20 of Figures 4 and 5). Tubes 6 may be telescoping tubes or singular tubes with resilient means such as springs therein, as shown in US-A- 4,199,841 and 4,463,476 (Jaccard I and II). The motor 10 may be a conventional electric motor as used in electric razors, drills and the like. In Figure 3 the tenderizer in use is illustrated as it contacts the meat 17 to be tenderized. It is preferred for best results that the bottom surface 18 of guide 4 be rounded for a rocking action when tenderizing; however, a flat bottom could be used if appropriate. Two hands may be used to steady the tenderizer or one hand could be used at the trigger 15 section. The blades 7 are projected downwardly into the meat 17 cutting or severing the tendons or connective tissue in the meat to tenderize it, improving the texture of the meat, reducing cooking time, and providing a tenderizing effect while maintaining the natural juices in the meat.

The present invention provides for easier cleaning of the blades than possible in prior art devices. The front blade housing 5 is easily removed to gain access to the blades to clean the blades and/or to provide easy means for lubricating and coating the interior metal portions. Proper lubrication of the interior with salad or cooking oils greatly enhances the operability of the tenderizer. The arrangement of the blades 7 and segments 9 need not be disturbed when housing 5 is removed. This is a significant improvement over the arrangement of tenderizers disclosed in US-A- 4,199,841 and 4,463,476 (Jaccard I and II) where the blade segments are automatically disengaged when the unit is dismantled for cleaning. This feature is a departure from the structure of prior art tenderizers; see, for example, Figure 4 of Jaccard I wherein removal of screw 25 automatically disengages blade segments 15 which then require alignment and fitting when reassembled. The loosening of separation means or screws 16 in the present structure does not disturb the blade segments 9 arrangement and thus does not require a complex blade realignment and fitting after oiling, etc. Note in Figures 1 to 3 of the present invention that the screws 16 merely disengage the housing 5 from housing 2 and do not disturb the blade 7 or segment 9 arrangement.

In Figures 4 and 5 a second embodiment of the present invention is illustrated. In these figures the handle housing 19 is located above the blade housing 20 and attached thereto by screws 21. The trigger 22 can be located inside of handle section 23 and is easily accessible there. Again, blade oiling or blade changing is greatly simplified since screws 21 do not interfere with or touch the blades when removed. Thus, reassembly is not necessary in the majority of cases when blade housing 20 is disengaged from handle housing 19. In this embodiment, motor 24 is located above blade segments 9 and blade holder 13. Arm 27 and motor rotary 28 (elements 12 and 11, respectively, in other figures) are also above blade segments 9. Arm 27 may be attached to the side of holder 13 as in Figure 5 or in the centre of holder 13 as in Figure 2 or a fork-like arrangement as in Figure 7.

In Figure 6 the rotary 11 arrangement with blade holders 13, blade tracks 29 and arm 12 is shown. As motor rotary 11 rotates, arm 12 follows its path and directs blade segments 9 up and down through guide 4 to the meat to be tenderized as shown in Figure 3. Blade tracks 29 are located on both sides of segments 9 and provide a secure path and travel track for segments 9 to follow in their upward and downward motion and to be used in removing blade holder 13 from the unit. As noted earlier, one or more blade segments 9 may be used. Arm 12 can be disengaged from holder 13 at connection 30 when blade holder 13 and segments 9 need to be removed or changed. Again, note that all other blade segments remain in their original position undisturbed and not requiring reassembly when only one segment 9 is removed as shown in Figure 7. The rotary arrangement shown in Figure 6 is different from Figure 7 in that only one arm 12 is used in Figure 6 whereas two legs are used in Figure 7. The same arrangement can be used for all embodiments of this invention; however, any other suitable arrangement can be used.

In Figure 7 a preferred embodiment for the blade holder 13 is illustrated; wherein T-shaped grooves 33 are provided in at least one end portion of blade holder 13. The blade segment 9 has a body portion 25, with the blades 7 extending from one edge, and with a portion 26 of T-shaped cross-section along its opposite edge. The T-shaped portion 26 may extend partially or wholly along the (upper) edge of segment 9. To remove a blade segment 9, the user merely slides a segment 9 from the groove 33 of holder 13 and the blade is removed and easily replaced. The blade holder 13 is removably connected to arm 12 by way of legs 32 to provide the up and down motion imparted by the rotation of rotary 11. Rotary 11 of course is connected to, and powered by, the motor 10 as shown in earlier figures.

In the embodiment shown in Figure 7 the drive connection to motor 10 would have two legs 32, one on each side of the holder 13, as shown, each connected to arm 12. Any suitable type of connection can be used; in the drawing one rotary 11 and one arm 12 are connected to a two prong fork-like connection with arms 32 extending to each side of blade holder 13 to power the blades in their up and down motion. Any other suitable arrangement may be used, if desired. This arrangement permits individual blade segments 9 to be slid out of grooves 33 and removed without removing any of the other segments 9.

## Claims

1. A handheld meat tenderizer including a housing (2), a blade assembly (13, 9) comprising one or more blade segments (9) and a blade holder (13), the or each blade segment comprising a body portion having a plurality of blades (7) extending therefrom; a guide plate (4) for the blades which is mounted by way of resilient mounting means (6) on the housing; and a power means (10) within the housing for moving the blade assembly with a reciprocating motion; the housing comprising a blade housing portion (5) and a handle portion (3) which are removably attached (16) to one another at a location remote from the blade assembly, and the sharpened terminal portions of the blades (7) being located behind the exterior surface of the guide plate (4) until pressure is applied to the housing by the user to compress the resilient mounting means and reduce the distance between the guide plate (4) and the housing (2), whereby on operation of the power means the blade terminal portions make reciprocating movements through an opening (8) in the guide plate; and wherein the blade holder (13) has at least one groove (33) of T-shaped cross-section therein, and the edge of the body portion of a blade segment remote from the blades is shaped for sliding engagement in the groove.

2. The tenderizer of claim 1 wherein the body portion of the or each blade segment (9) is slidably removable from, and replaceable in, the blade holder (13) when the two portions (3, 5) of the housing are detached from one another.

3. The tenderizer of claim 1 or claim 2 wherein the power means (10) is located in the handle portion.

4. The tenderizer of any one of claims 1 to 3 wherein the power means (10) is an electric motor.

5. The tenderizer of any one of claims 1 to 4 including connecting means (11, 12) to convey said reciprocating motion from the power means to the blade assembly.

6. The tenderizer of any one of claims 1 to 5 wherein the blade housing portion (5) and the handle portion (3) are removably attached to one another by removable screws (16) spaced from the blade assembly and out of contact therewith.

7. A blade segment (9) for use in a handheld meat tenderizer according to claim 1, comprising a substantially planar, substantially rectangular, body portion having a plurality of elongated sharpened blades (7) extending from one edge thereof, and at least part of the opposite edge of the body portion being of T-shaped cross section for sliding engagement in a groove of corresponding cross-sectional shape.

8. A blade assembly comprising a blade holder (13) and at least one blade segment (9) in accordance with claim 7, the blade holder having one or more grooves (33) therein adapted to receive the T-shaped portion of the or each blade segment.

## Patentansprüche

1. Weichklopf-Handgerät für Fleisch mit einem Gehäuse (2), mit einer Stech-Stößel-Anordnung (13,9), die ein oder mehrere Segmente (9) mit Stech- Stößeln und einen Stech-Stößel-Halter (13) umfaßt, wobei jedes Segment eine Vielzahl von Stech-Stößeln (7) aufweist, die von einem Haupt-Teil ausgehen, mit einer Führungsplatte (4) für die Stech- Stößel, die über federnde Montagemittel (6) mit dem Gehäuse verbunden ist, und mit Antriebsmitteln (10) im Gehäuse zur Auf- und Ab-Bewegung der Stech-Stößel-Anordnung in Umkehrrichtung; wobei das Gehäuse ein Gehäuseteil (5) für die Stech-Stößel und ein als Handgriff (3) dienendes Gehäuseteil umfaßt, das lösbar mit dem anderen Gehäuseteil an einer von der Stech-Stößel-Anordnung entfernten Stelle (16) verbunden ist und wobei die geschärften Enden der Stech-Stößel (7) solange hinter der Außenfläche der Führungsplatte (4) angeordnet sind bis durch den Benutzer Druck auf das Gehäuse ausgeübt wird, um die federnden Montagemittel zusammenzudrücken und den Abstand zwischen Führungsplatte (4) und Gehäuse (2) derart zu verringern, daß beim Betrieb der Antriebsmittel die Stech-Stößelenden Auf- und Abwärts-Umkehrbewegungen durch eine Öffnung (8) in der Führungsplatte ausführen, in welcher der Stech-Stößel-Halter (13) mindestens eine Nut (33) mit T-förmigen Querschnitt aufweist, in welcher der dem Nutquerschnitt angepaßte Rand des Haupt- Teiles auf der den Stech-Stößeln abgewandten Seite mit Schiebe-Eingriff geführt ist.

2. Weichklopf-Handgerät nach Anspruch 1,
in welchem der Haupt-Teil jedes Segments (9) mit Stech-Stößeln zur Auswechselbarkeit verschieblich aus dem Stech-Stößel-Halter (13) entfernbar ist, wenn die zwei Gehäuseteile (3,5) voneinander getrennt sind.

3. Weichklopf-Handgerät nach Anspruch 1 oder 2,
bei dem die Antriebsmittel (10) im Handgriff angeordnet sind.

4. Weichklopf-Handgerät nach einem der Ansprüche 1 bis 3,
bei dem die Antriebsmittel (10) ein elektrischer Motor sind.

5. Weichklopf-Handgerät nach einem der Ansprüche 1 bis 4,
welches Verbindungsmittel (11,12) zwischen den Antriebsmitteln und der Stech-Stößel-Anordnung zum Bewirken der Umkehrbewegung aufweist.

6. Weichklopf-Handgerät nach einem der Ansprüche 1 bis 5,
bei dem das Gehäuseteil (5) für die Stech-Stößel mit dem als Handgriff dienenden Gehäuseteil (3) durch lösbare Schrauben (16) lösbar miteinander verbunden ist und der Handgriff vom Gehäuseteil für die Stech-Stößel getrennt ist.

7. Ein Segment (9) mit Stech-Stößeln zum Gebrauch in Weichklopf-Handgeräten gemäß Anspruch 1,
mit einem im wesentlichen ebenen und rechteckigen Haupt-Teil, mit einer Vielzahl von zugespitzt geschärften Stech-Stößeln (7) , die sich auf einer Seite des Haupt-Teils erstrecken und bei dem mindestens ein Teil der dieser gegenüberliegenden Seite einen T-förmigen Querschnitt für einen Schiebe-Eingriff in einer Nut entsprechenden Querschnittes aufweist.

8. Eine Stech-Stößel-Anordnung mit einem Stech-Stößel-Halter (13) und mindestens einem Segment (9) mit Stech-Stößeln gemäß Anspruch 7, bei der der Stech-Stößel-Halter eine oder mehrere Nuten (33) aufweist zur Aufnahme des T-Profil-Teiles jedes Segmentes mit Stech-Stößeln.

## Revendications

1. Attendrisseur de viande portatif, comprenant une carcasse (2), un ensemble de lames (13, 9) qui comprend un ou plusieurs segments de lames (9) et une monture de lames (13), le ou chaque segment de lames comprenant une portion corps sur laquelle font saillie une pluralité de lames (7) ; une plaque guide (4) pour les lames qui est montée sur la carcasse à l'aide de moyens de montage élastiques (6) ; et des moyens d'entraînement (10) logés dans la carcasse, qui servent à animer l'ensemble de lames d'un mouvement alternatif ; la carcasse comprenant une portion carter de lames (5) et une portion manche (3) qui sont fixées l'une à l'autre de façon démontable (16) à un endroit éloigné de l'ensemble de lames, et les portions terminales affûtées des lames (7) étant situées en arrière de la surface extérieure de la plaque guide (4) jusqu'au moment où une pression est appliquée à la carcasse par l'utilisateur pour comprimer les moyens de montage élastiques et réduire la distance entre la plaque guide (4) et la carcasse (2), de sorte qu'en réponse à l'entrée en action des moyens d'entraînement, les portions terminales des lames exécutent des mouvements alternatifs à travers une ouverture (8) de la plaque guide ; et dans lequel la monture de lames (13) présente au moins une rainure (33) à section en forme de T, et le bord de la portion corps d'un segment de lames qui est éloigné des lames est conformé pour s'engager à coulissement dans la rainure.

2. Attendrisseur selon la revendication 1, dans lequel la portion corps du ou de chaque segment de lames (9) peut être séparée de la monture de lames (13) par coulissement, et peut y être remise en place par coulissement, lorsque les deux portions (3, 5) de la carcasse sont séparées l'une de l'autre.

3. Attendrisseur selon la revendication 1 ou la revendication 2, dans lequel les moyens d'entraînement (10) sont logés dans la portion manche.

4. Attendrisseur selon une quelconque des revendications 1 à 3, dans lequel les moyens d'entraînement (10) sont un moteur électrique.

5. Attendrisseur selon une quelconque des revendications 1 à 4, qui comprend des moyens de liaison (11, 12) pour transmettre ledit mouvement alternatif des moyens d'entraînement à l'ensemble de lames.

6. Attendrisseur selon une quelconque des revendications 1 à 5, dans lequel la portion carter de lames (5) et la portion manche (3) sont fixées l'une à l'autre de façon démontable par des vis amovibles (16), espacées de l'ensemble de lames et hors de contact avec cet ensemble.

7. Segment de lames (9) destiné à être utilisé dans un attendrisseur de viande portatif selon la revendication 1, qui comprend une portion corps pratiquement plane, pratiquement rectangulaire, sur un bord de laquelle font saillie une pluralité de lames affûtées, allongées (7), et au moins une partie du bord opposé de la portion corps ayant une section en forme de T pour s'engager à coulissement dans une rainure ayant une forme de section correspondante.

8. Ensemble de lames comprenant une monture de lames (13) et au moins un segment de lames (9) selon la revendication 7, la monture de lames présentant une ou plusieurs rainures (33) adaptées pour recevoir la portion en forme de T du ou de chaque segment de lames.
